# EUROPEAN PATENT APPLICATION

(11) **EP 2 281 783 A1**
(43) Date of publication of application: **09.02.2011**
(21) Application number: 09738607.2
(22) Date of filing: 22.04.2009
(51) Int. Cl.: C01G 23/04, C04B 35/46

(54) **POROUS ALUMINUM TITANATE, SINTERED BODY OF THE SAME, AND METHOD FOR PRODUCING THE SAME**

(30) Priority: 28.04.2008 JP 2008117077
(71) Applicant: Otsuka Chemical Co., Ltd., Osaka-shi, Osaka 540-0021 (JP)
(72) Inventor: ITOI, Nobuki, Tokushima-shi Tokushima 771-0193 (JP); MISHIMA, Takahiro, Tokushima-shi Tokushima 771-0193 (JP); OGAWA, Hidetoshi, Tokushima-shi Tokushima 771-0193 (JP)
(74) Representative: TER MEER - STEINMEISTER & PARTNER GbR
(86) International application number: PCT/JP2009/001840
(87) International publication number: WO 2009/133670

(57) **Abstract**

To obtain novel porous aluminum titanate in which aluminum titanate itself is porous, a sintered body of the porous aluminum titanate and a method for producing the porous aluminum titanate. Porous aluminum titanate is composed of porous particles having a form in which a plurality of particles of amoeba-like shape having a plurality of projections extending in random directions are fused together. For example, its pore volume within the pore diameter range of 0.0036 to 10 µm in a pore size distribution as measured by a mercury porosimeter is 0.05 ml/g or more.

## Description

### TECHNICAL FIELD

This invention relates to porous aluminum titanate, a sintered body of the same and a method for producing the same.

### BACKGROUND ART

Aluminum titanate has low thermal expansivity, excellent thermal shock resistance and a high melting point. Therefore, aluminum titanate has been expected as a porous material used such as for a catalyst support for automobile exhaust gas treatment or a diesel particulate filter (DPF), and developed in various ways.

In relation to production of aluminum titanate, the inclusion of a SiO₂ component is known to improve the high-temperature stability of the resultant aluminum titanate (see for example Patent Literature 1). Furthermore, when aluminum titanate is used for a DPF or the like as described above, a porous sintered body of aluminum titanate need be formed. There is proposed a method for producing a porous sintered aluminum titanate body, wherein aluminum titanate powder is mixed with combustible powder, such as plastic powder or graphite, and the powder mixture is fired (see Patent Literature 2). The literature describes that by controlling the particle diameter and amount of addition of the combustible powder, pores and microcracks in the sintered body can be optimally controlled.

There is also proposed a method for producing a high-porosity porous body by including inorganic microballoon containing an aluminum component and/or a silicon component into a source material during production of aluminum titanate (see Patent Literature 3).

In the known techniques, however, no consideration has been given to making aluminum titanate particles themselves porous. In addition, no consideration has been given to producing a porous sintered body using porous aluminum titanate powder.

### CITATION LIST

### Patent Literature

Patent Literature 1: Published Japanese Patent Application No. S57-3767
Patent Literature 2: Published Japanese Patent Application No. H07-138083
Patent Literature 3: Published Japanese Patent Application No. 2007-84380

### SUMMARY OF INVENTION

### Technical Problem

An object of the present invention is to provide novel porous aluminum titanate in which aluminum titanate particles themselves are porous, a sintered body of the porous aluminum titanate and a method for producing the porous aluminum titanate.

### Solution to Problem

Porous aluminum titanate of the present invention is characterized by being composed of porous particles each having a form in which a plurality of particles of amoeba-like shape having a plurality of projections extending in random directions are fused together.

The porous aluminum titanate of the present invention has a form in which a plurality of particles of amoeba-like shape having a plurality of projections extending in random directions are fused together. The fusion of the particles of amoeba-like shape causes the formation of a large number of pores, thereby providing porous particles. By forming a sintered body using such aluminum titanate composed of porous particles, more porous sintered aluminum titanate body can be formed.

By using such a sintered body, for example, as a DPF, particulates can be efficiently trapped.

In the porous aluminum titanate of the present invention, the pore volume within the pore diameter range of 0.0036 to 10 µm in a pore size distribution as measured by a mercury porosimeter is preferably 0.05 ml/g or more. If the porous aluminum titanate is one having a pore volume of 0.05 ml/g or more, a more porous sintered body can be formed. When the porous sintered body is used, for example, as a DPF, the particulate trapping efficiency can be further increased.

The upper limit of the pore volume is not particularly limited, but an example of the upper limit is 0.2 ml/g.

In the porous aluminum titanate of the present invention, the specific surface area within the pore diameter range of 0. 0036 to 10 µm in a pore size distribution as measured by a mercury porosimeter is preferably 0.3 m²/g or more. If the porous aluminum titanate has a specific surface area of 0. 3 m²/g or more, a more porous sintered body can be provided when formed from the porous aluminum titanate. Therefore, for example, when the sintered body is used as a DPF, a higher particulate trapping efficiency can be achieved.

The upper limit of the specific surface area is not particularly limited, but an example of the upper limit of the specific surface area is 0.6 ml/g.

A porous sintered aluminum titanate body of the present invention is characterized by being obtained by firing a green body formed using the porous aluminum titanate of the present invention.

Since the sintered body of the present invention uses the porous aluminum titanate of the present invention, the aluminum titanate particles themselves are porous, whereby the sintered body can be one having a large number of finer micropores. Therefore, for example, when the sintered body is used as a DPF or the like, a higher particulate trapping efficiency can be achieved.

A production method of the present invention is a method that can produce the porous aluminum titanate of the present invention, and is characterized by including the steps of: mixing a source material containing a titanium source and an aluminum source while mechanochemically milling the source material; and firing the milled mixture obtained.

According to the production method of the present invention, a milled mixture is used which is obtained by mixing a source material containing a titanium source and an aluminum source while mechanochemically milling the source material. By firing such a milled mixture, porous aluminum titanate can be produced which is composed of porous particles each having a form in which a plurality of particles of amoeba-like shape having a plurality of projections extending in random directions are fused together.

The temperature for firing the milled mixture is preferably within the temperature range of 1300°C to 1600°C. By firing the milled mixture within this temperature range, the porous aluminum titanate of the present invention can be more efficiently produced.

The firing time is not particularly limited but preferably within the range of 0.5 to 20 hours.

In the production method of the present invention, an example of the mechanochemical milling is a method of milling the source material while giving it physical impact. A specific example thereof is milling using a vibration mill. It can be assumed that by performing a milling process using a vibration mill, a disorder of atomic arrangement and a reduction of interatomic distance are concurrently caused by shear stress due to frictional grinding of the powder mixture, and this causes atom transfer at contact points between different kinds of particles, resulting in the formation of a metastable phase. Thus, a high reaction activity milled mixture is obtained. By firing the high reaction activity milled mixture, the porous aluminum titanate of the present invention can be produced.

The mechanochemical milling in the present invention is performed in a dry process using neither water nor solvent.

The time of mixing involved in the mechanochemical milling is not particularly limited but generally preferably within the range of 0.1 to 6 hours.

The source material used in the present invention contains a titanium source and an aluminum source. Examples of the titanium source that can be used include compounds containing titanium oxide, and specific examples thereof include titanium oxide, rutile ores, wet cake of titanium hydroxide and aqueous titania.

Examples of the aluminum source that can be used include compounds that can produce aluminum oxide by heat application, and specific examples thereof include aluminum oxide, aluminum hydroxide and aluminum sulfate. Among them, aluminum oxide is particularly preferably used.

The mixing ratio of the titanium source and the aluminum source is basically Ti:Al = 1:2 (in molar ratio). However, a change of plus or minus about 10% in content of each source will present no problem.

Furthermore, in the production method of the present invention, a zinc compound is preferably further contained in the source material.

By containing a zinc compound in the source material, more porous aluminum titanate can be produced. Examples of the zinc compound include zinc oxide and zinc sulfate. Among them, zinc oxide is particularly preferably used.

The content of the zinc compound is preferably within the range of 0.5% to 2.0% by weight, in terms of zinc oxide, relative to the sum of the titanium source and the aluminum source. If the content of the zinc compound is within the above range, the effect of providing more porous aluminum titanate due to addition of the zinc compound can be more effectively achieved.

Furthermore, in the production method of the present invention, a silicon source may be further contained in the source material.

By containing a silicon source in the source material, the decomposition of aluminum titanate can be reduced, whereby porous aluminum titanate excellent in high-temperature stability can be produced.

Examples of the silicon source include silicon oxide and silicon. Among them, silicon oxide is particularly preferably used. The content of the silicon source in the source material is preferably within the range of 0.5% to 10% by weight, in terms of silicon oxide, relative to the sum of the titanium source and the aluminum source. If the content of the silicon source is within the above range, porous aluminum titanate can be more stably produced.

The sintered aluminum titanate body in the present invention can be produced by preparing a mixture composition in which, for example, a pore forming agent, a binder, a dispersant and water are added to the porous aluminum titanate of the present invention, forming the mixture composition into a green body providing a honeycomb structure, for example, by using an extruder, sealing one of two end openings of each cell of the honeycomb structure so that the cell end openings at each end of the honeycomb structure are arranged in a checkered pattern, drying the obtained green body and then firing the green body. The firing temperature is, for example, 1400°C to 1600°C.

Examples of the pore forming agent include graphite, wood powder and polyethylene. Examples of the binder include methylcellulose, ethylcellulose and polyvinyl alcohol. Examples of the dispersant include fatty acid soap and ethylene glycol. The amounts of pore forming agent, binder, dispersant and water can be appropriately controlled.

### Advantageous Effects of Invention

The porous aluminum titanate of the present invention is aluminum titanate in which aluminum titanate particles themselves are porous. Therefore, by using the porous aluminum titanate of the present invention, a more porous sintered body can be obtained than when conventional aluminum titanate is used.

The porous sintered aluminum titanate body of the present invention is more porous than sintered bodies using conventional aluminum titanate. Therefore, for example, when the sintered body is used as a DPF or the like, a higher particulate trapping efficiency can be achieved.

According to the production method of the present invention, the porous aluminum titanate of the present invention can be produced.

### BRIEF DESCRIPTION OF DRAWINGS

[FIG. 1] FIG. 1 is a chart showing an X-ray diffraction pattern of Example 1.
[FIG. 2] FIG. 2 is a SEM photograph showing porous aluminum titanate of Example 1.
[FIG. 3] FIG. 3 is a chart showing an X-ray diffraction pattern of Example 2.
[FIG. 4] FIG. 4 is a SEM photograph showing porous aluminum titanate of Example 2.
[FIG. 5] FIG. 5 is a chart showing an X-ray diffraction pattern of Example 3.
[FIG. 6] FIG. 6 is a SEM photograph showing porous aluminum titanate of Example 3.
[FIG. 7] FIG. 7 is a chart showing an X-ray diffraction pattern of Example 4.
[FIG. 8] FIG. 8 is a SEM photograph showing porous aluminum titanate of Example 4.
[FIG. 9] FIG. 9 is a chart showing an X-ray diffraction pattern of Example 5.
[FIG. 10] FIG. 10 is a SEM photograph showing porous aluminum titanate of Example 5.
[FIG. 11] FIG. 11 is a chart showing an X-ray diffraction pattern of Example 6.
[FIG. 12] FIG. 12 is a SEM photograph showing porous aluminum titanate of Example 6.
[FIG. 13] FIG. 13 is a chart showing an X-ray diffraction pattern of Example 7.
[FIG. 14] FIG. 14 is a SEM photograph showing porous aluminum titanate of Example 7.
[FIG. 15] FIG. 15 is a chart showing an X-ray diffraction pattern of Example 8.
[FIG. 16] FIG. 16 is a SEM photograph showing porous aluminum titanate of Example 8.
[FIG. 17] FIG. 17 is a chart showing an X-ray diffraction pattern of Example 9.
[FIG. 18] FIG. 18 is a SEM photograph showing porous aluminum titanate of Example 9.
[FIG. 19] FIG. 19 is a chart showing an X-ray diffraction pattern of Example 10.
[FIG. 20] FIG. 20 is a SEM photograph showing porous aluminum titanate of Example 10.
[FIG. 21] FIG. 21 is a chart showing an X-ray diffraction pattern of Example 11.
[FIG. 22] FIG. 22 is a SEM photograph showing porous aluminum titanate of Example 11.
[FIG. 23] FIG. 23 is a chart showing an X-ray diffraction pattern of Comparative Example 1.
[FIG. 24] FIG. 24 is a SEM photograph showing porous aluminum titanate of Comparative Example 1.
[FIG. 25] FIG. 25 is a chart showing an X-ray diffraction pattern of Comparative Example 2.
[FIG. 26] FIG. 26 is a SEM photograph showing porous aluminum titanate of Comparative Example 2.
[FIG. 27] FIG. 27 is a graph showing rates of reduction in number concentration of particulates in sintered aluminum titanate bodies of Examples 12 to 14 and Comparative Example 3.

### DESCRIPTION OF EMBODIMENTS

Hereinafter, the present invention will be described in detail with reference to specific examples, but is not limited by the following examples.

### [Production of Porous Aluminum Titanate]

### (Example 1)

An amount of 302.26 g of titanium oxide, 423.42 g of aluminum oxide, 29.59 g of silicon oxide and 6.63 g of zinc oxide were mixed for 0.5 hours while milled with a vibration mill.

An amount of 50 g of the milled mixture obtained in the above manner was packed into a crucible and then fired at 1450°C for four hours in an electric furnace.

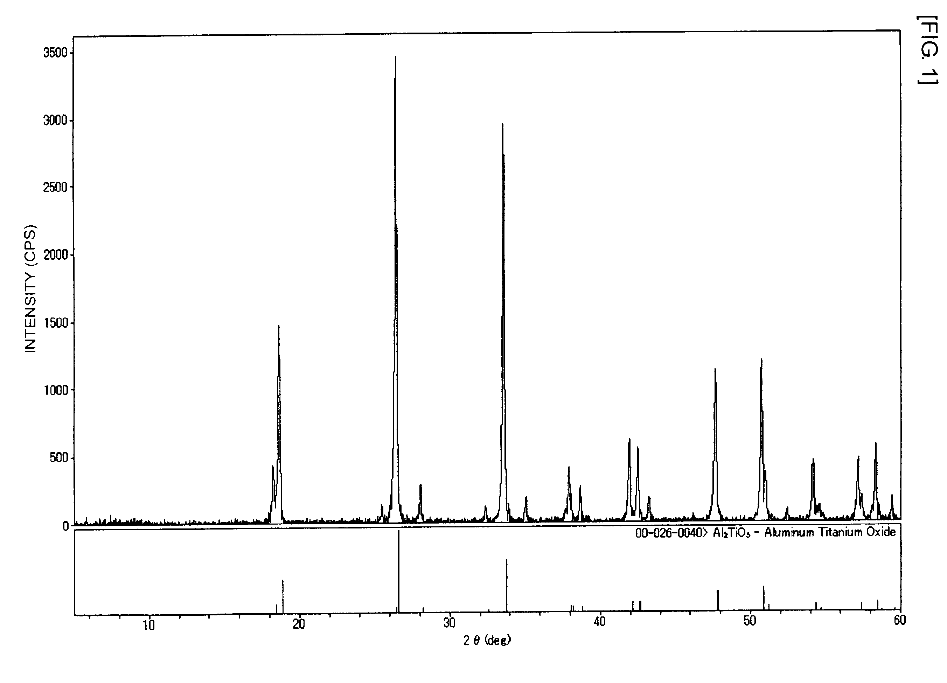

An X-ray diffraction pattern chart of the obtained product is shown in FIG. 1. As shown in FIG. 1, the obtained product was Al₂TiO₅.

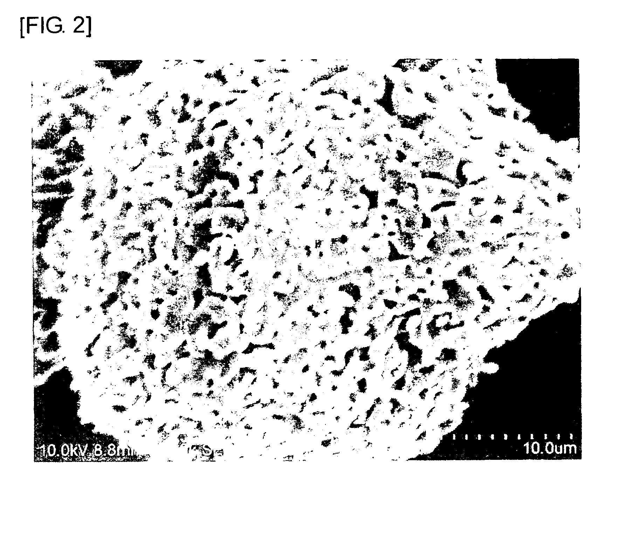

Furthermore, the obtained product was observed with a scanning electron microscope (SEM). FIG. 2 is a SEM photograph.

As shown in FIG. 2, the obtained aluminum titanate particle has a form in which a plurality of particles of amoeba-like shape having a plurality of projections extending in random directions are fused together. The fusion of a plurality of particles of amoeba-like shape causes the formation of a large number of pores, thereby providing a porous body.

The obtained porous aluminum titanate was measured in terms of pore size distribution by mercury porosimetric pore size distribution measurement (mercury porosimetry). The pore volume within the pore diameter range of 0. 0036 to 10 µm was 0.0937 ml/g, and the specific surface area therewithin was 0.447 m²/g.

### (Example 2)

A milled mixture was prepared in the same manner as in Example 1. An amount of 50 g of the obtained milled mixture was packed into a crucible and then fired at 1250°C for four hours in an electric furnace.

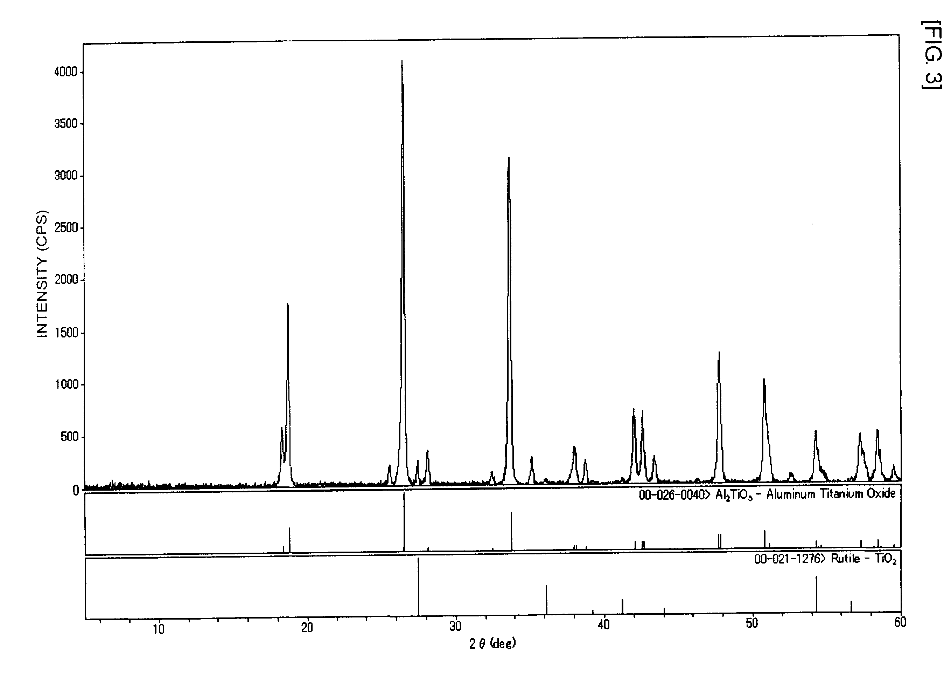

FIG. 3 is an X-ray diffraction pattern chart of the obtained product. As shown in FIG. 3, the obtained product was a mixture of Al₂TiO₅ and TiO₂.

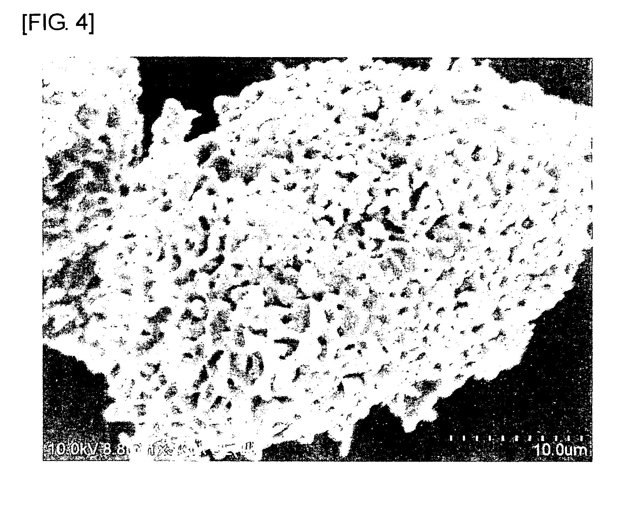

FIG. 4 is a SEM photograph of the obtained aluminum titanate. It can be seen from FIG. 4 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.1032 ml/g, and the specific surface area was 0.481 m²/g.

### (Example 3)

A milled mixture was prepared in the same manner as in Example 1. An amount of 50 g of the obtained milled mixture was packed into a crucible and then fired at 1300°C for four hours in an electric furnace.

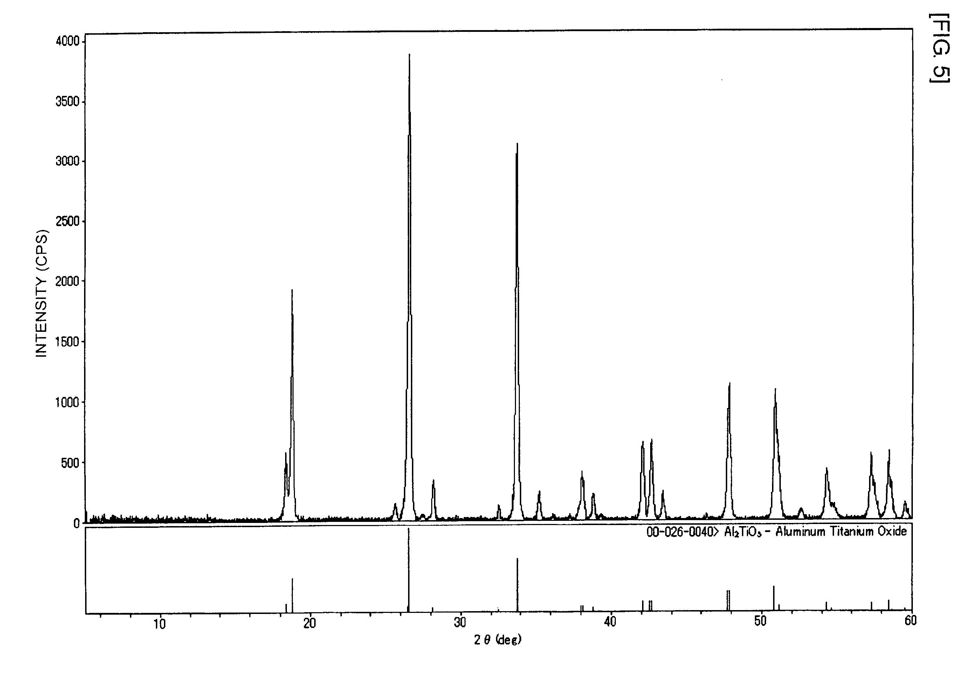

FIG. 5 is an X-ray diffraction pattern chart of the obtained product. As shown in FIG. 5, the obtained product was Al₂TiO₅.

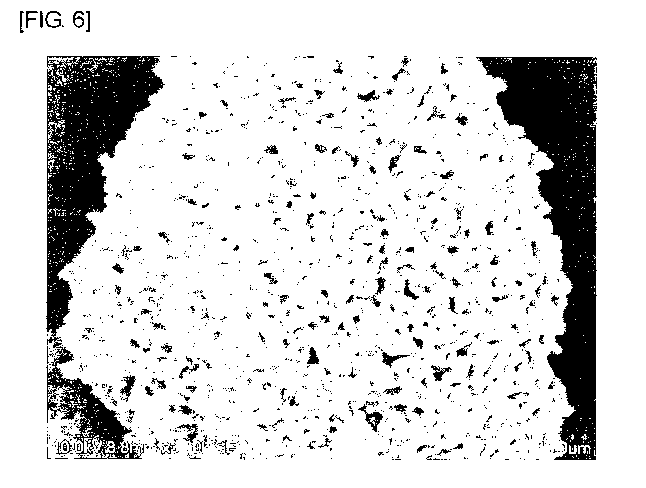

FIG. 6 is a SEM photograph of the obtained aluminum titanate. It can be seen from FIG. 6 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.0988 ml/g, and the specific surface area was 0.465 m²/g.

### (Example 4)

A milled mixture was prepared in the same manner as in Example 1. An amount of 50 g of the obtained milled mixture was packed into a crucible and then fired at 1400°C for four hours in an electric furnace.

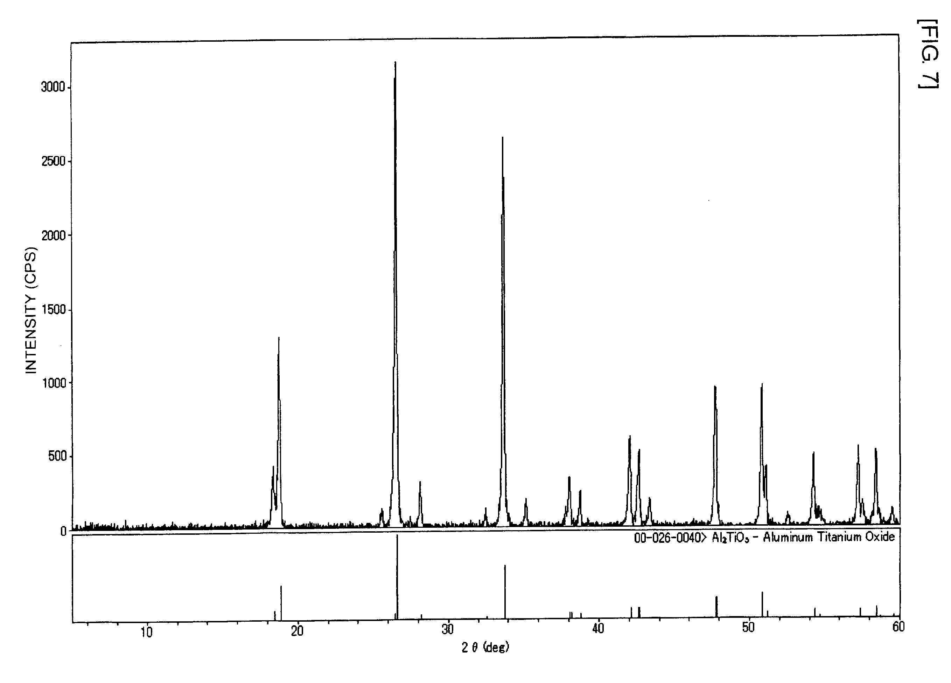

FIG. 7 is an X-ray diffraction pattern chart of the obtained product. As shown in FIG. 7, the obtained product was Al₂TiO₅.

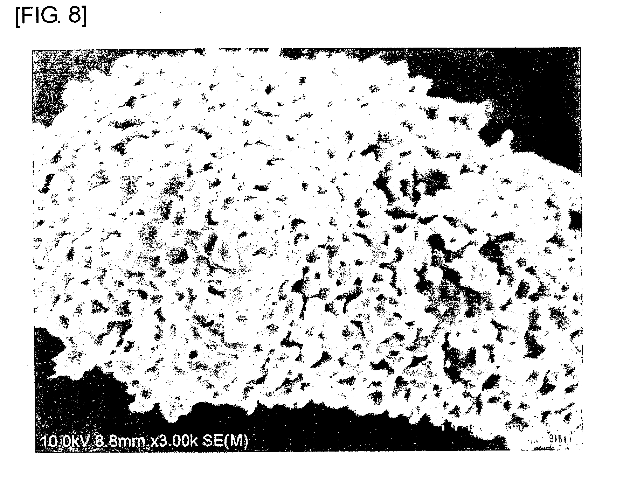

FIG. 8 is a SEM photograph of the obtained aluminum titanate. It can be seen from FIG. 8 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.0972 ml/g, and the specific surface area was 0.459 m²/g.

### (Example 5)

A milled mixture was prepared in the same manner as in Example 1. An amount of 50 g of the obtained milled mixture was packed into a crucible and then fired at 1600°C for four hours in an electric furnace.

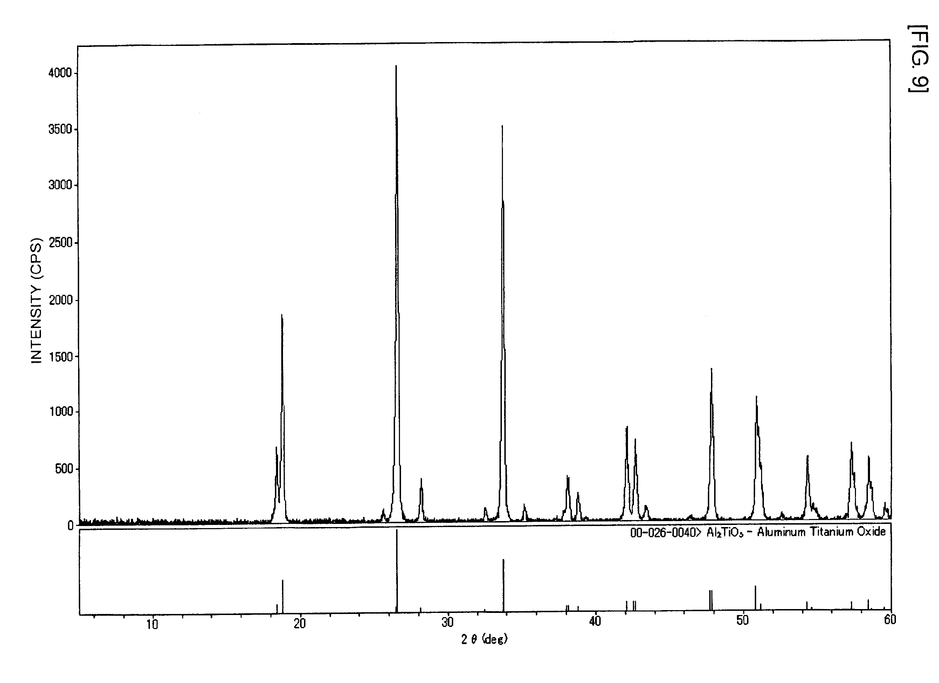

FIG. 9 is an X-ray diffraction pattern chart of the obtained product. As shown in FIG. 9, the obtained product was Al₂TiO₅.

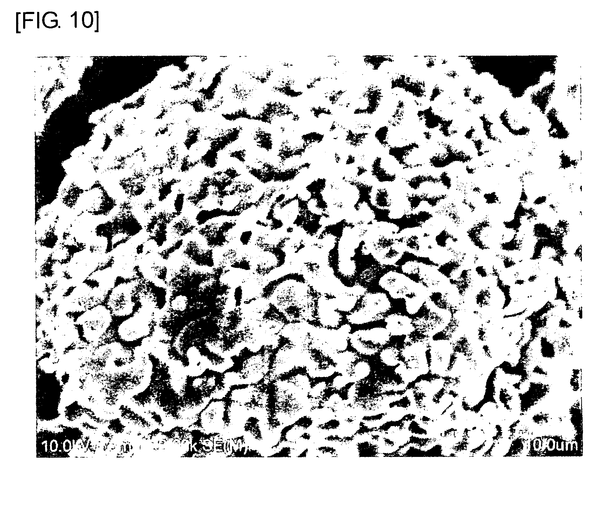

FIG. 10 is a SEM photograph of the obtained aluminum titanate. It can be seen from FIG. 10 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.0790 ml/g, and the specific surface area was 0.405 m²/g.

### (Example 6)

A milled mixture was prepared in the same manner as in Example 1 except that the amount of zinc oxide added was 3.63 g. An amount of 50 g of the obtained milled mixture was packed into a crucible and then fired at 1450°C for four hours in an electric furnace.

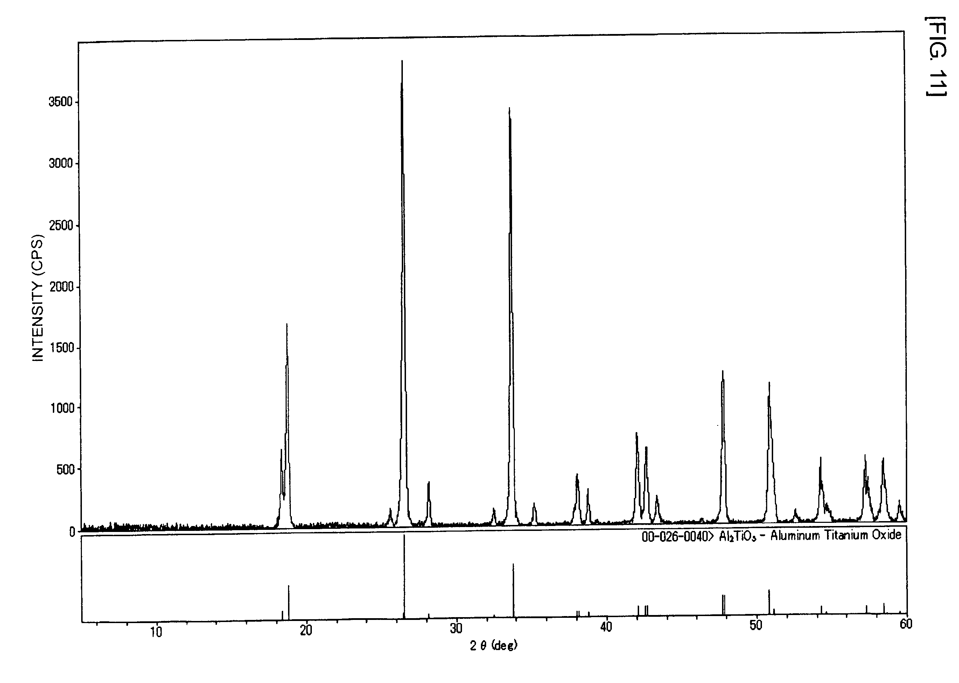

FIG. 11 is an X-ray diffraction pattern chart of the obtained product. As shown in FIG. 11, the obtained product was Al₂TiO₅.

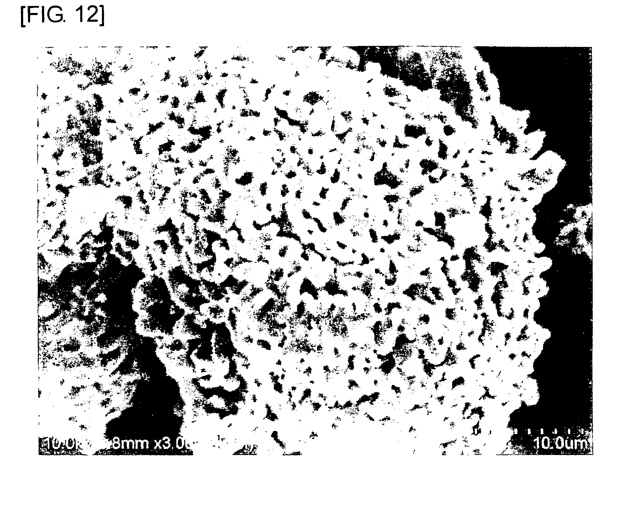

FIG. 12 is a SEM photograph of the obtained aluminum titanate. It can be seen from FIG. 12 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.0884 ml/g, and the specific surface area was 0.436 m²/g.

### (Example 7)

A milled mixture was prepared in the same manner as in Example 1 except that the amount of zinc oxide added was 11.6 g. An amount of 50 g of the obtained milled mixture was packed into a crucible and then fired at 1450°C for four hours in an electric furnace.

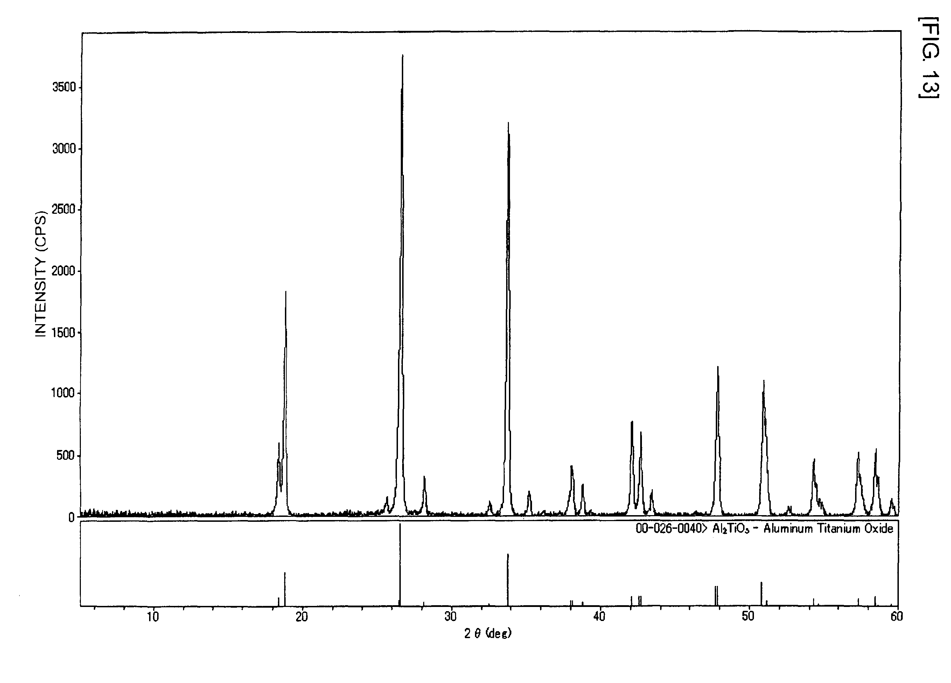

FIG. 13 is an X-ray diffraction pattern chart of the obtained product. As shown in FIG. 13, the obtained product was Al₂TiO₅.

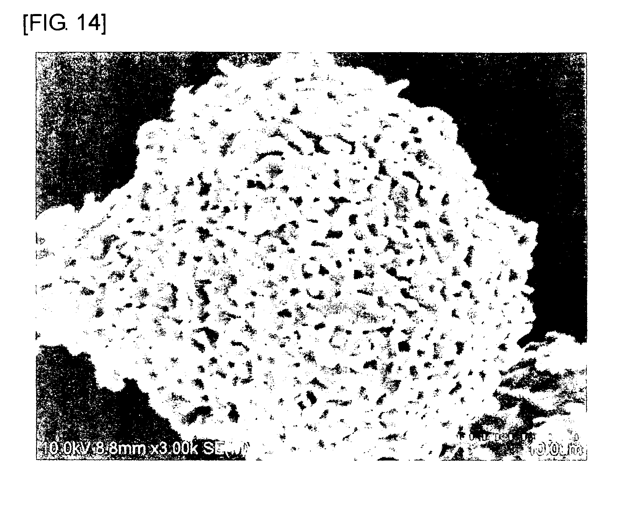

FIG. 14 is a SEM photograph of the obtained aluminum titanate. It can be seen from FIG. 14 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.0912 ml/g, and the specific surface area was 0.439 m²/g.

### (Example 8)

A milled mixture was prepared in the same manner as in Example 1 except that the amount of zinc oxide added was 14.5 g. An amount of 50 g of the obtained milled mixture was packed into a crucible and then fired at 1450°C for four hours in an electric furnace.

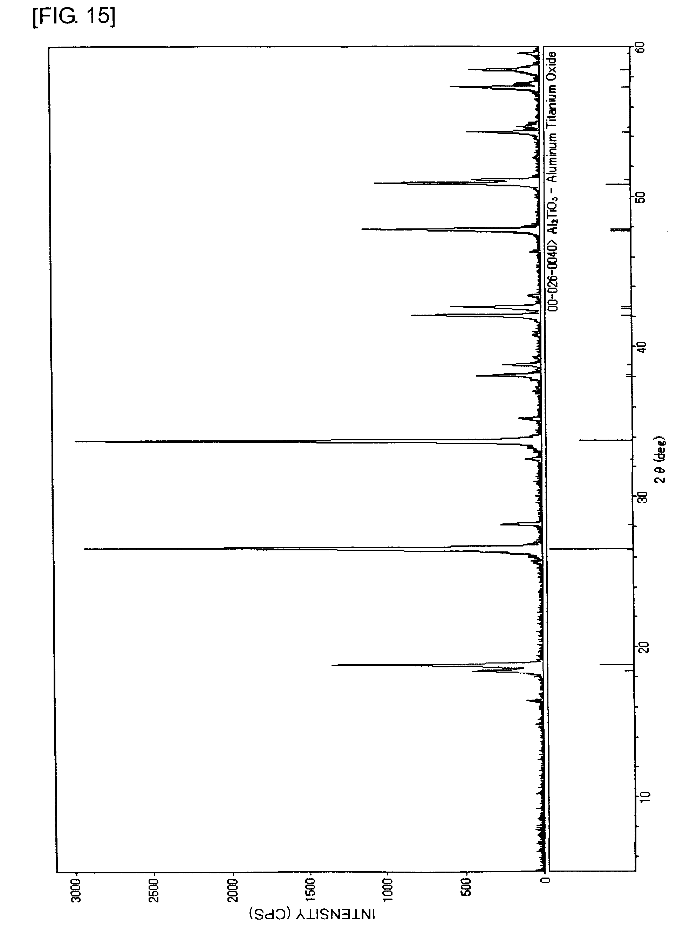

FIG. 15 is an X-ray diffraction pattern chart of the obtained product. As shown in FIG. 15, the obtained product was Al₂TiO₅.

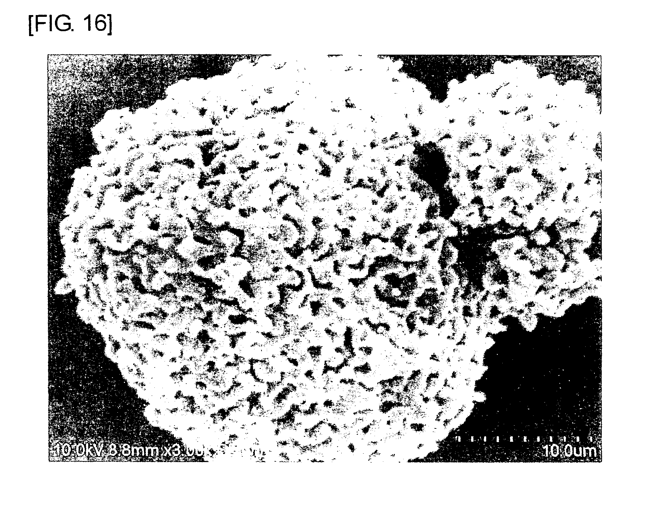

FIG. 16 is a SEM photograph of the obtained aluminum titanate. It can be seen from FIG. 16 that, like Example 1, the product is a porous particle having a form in which a plurality of particles of amoeba-like shape are fused together.

The obtained porous aluminum titanate was measured in terms of pore size distribution in the same manner as in Example 1. The pore volume was 0.0927 ml/g, and the specific surface area was 0.440 m²/g.

### (Example 9)

A milled mixture was prepared in the same manner as in Example 1 except that the amount of zinc oxide added was 16.0 g. An amount of 50 g of the obtained milled mixture was packed into a crucible and then fired at 1450°C for four hours in an electric furnace.

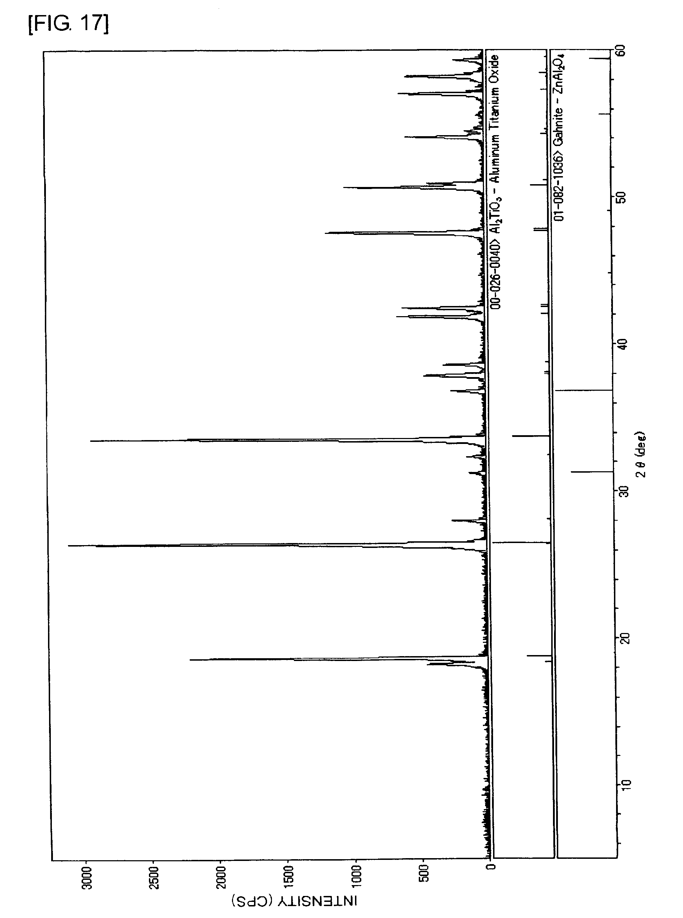

FIG. 17 is an X-ray diffraction pattern chart of the obtained product. As shown in FIG. 17, the obtained product was a mixture of Al₂TiO₅ and ZnAl₂O₄.

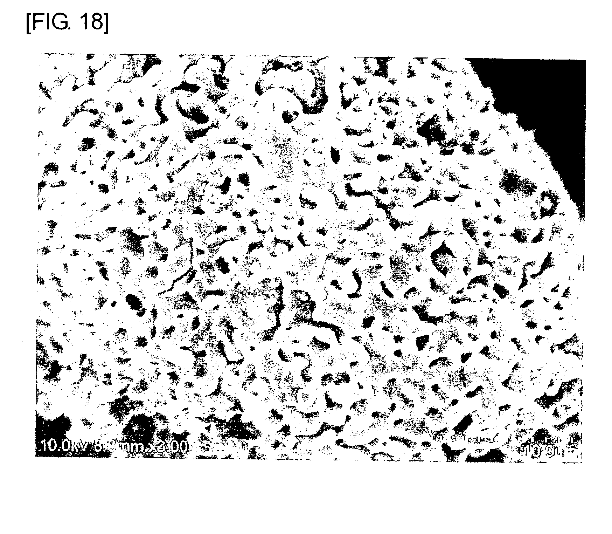

FIG. 18 is a SEM photograph of the obtained aluminum titanate. It can be seen from FIG. 18 that, like Example 1, the product is a porous body having a form in which a plurality of particles of amoeba-like shape are fused together.

The obtained porous aluminum titanate was measured in terms of pore size distribution in the same manner as in Example 1. The pore volume was 0.0826 ml/g, and the specific surface area was 0.412 m²/g.

### (Example 10)

A milled mixture was prepared in the same manner as in Example 1 except that no zinc oxide was added. An amount of 50 g of the obtained milled mixture was packed into a crucible and then fired at 1400°C for four hours in an electric furnace.

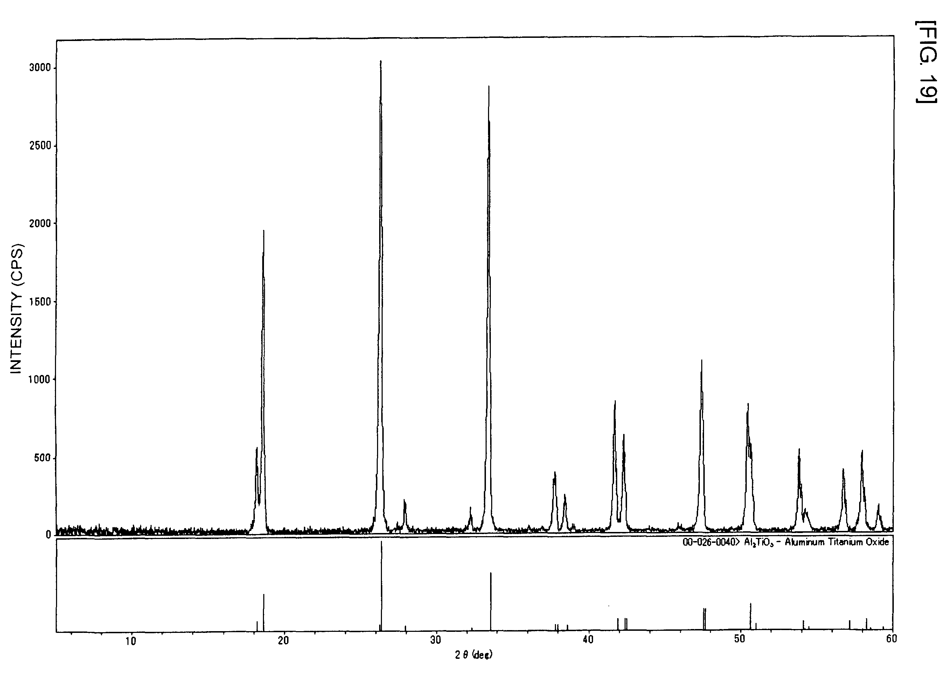

FIG. 19 is an X-ray diffraction pattern chart of the obtained product. As shown in FIG. 19, the obtained product was Al₂TiO₅.

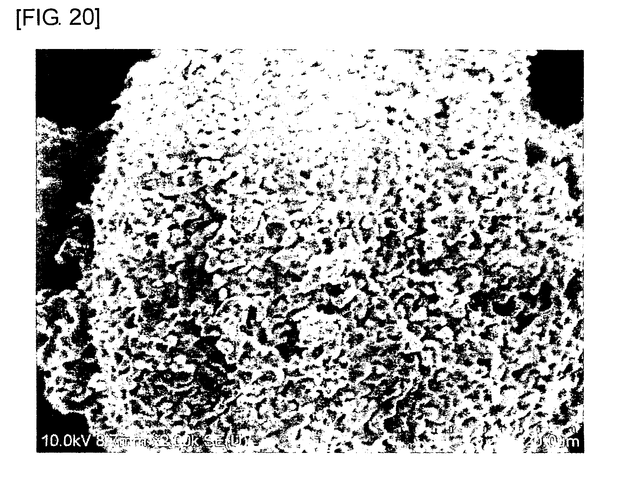

FIG. 20 is a SEM photograph of the obtained aluminum titanate. It can be seen from FIG. 20 that, like Example 1, the product is a porous body having a form in which a plurality of particles of amoeba-like shape are fused together.

The obtained porous aluminum titanate was measured in terms of pore size distribution in the same manner as in Example 1. The pore volume was 0.0654 ml/g, and the specific surface area was 0.378 m²/g.

### (Example 11)

A milled mixture was prepared in the same manner as in Example 1 except that no zinc oxide was added. An amount of 50 g of the obtained milled mixture was packed into a crucible and then fired at 1450°C for four hours in an electric furnace.

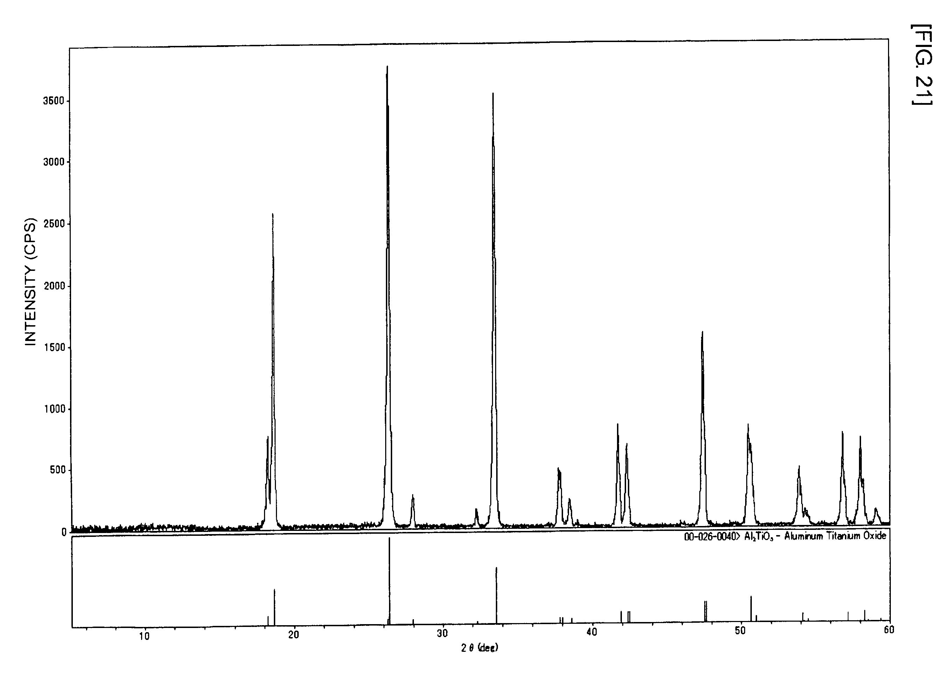

FIG. 21 is an X-ray diffraction pattern chart of the obtained product. As shown in FIG. 21, the obtained product was Al₂TiO₅.

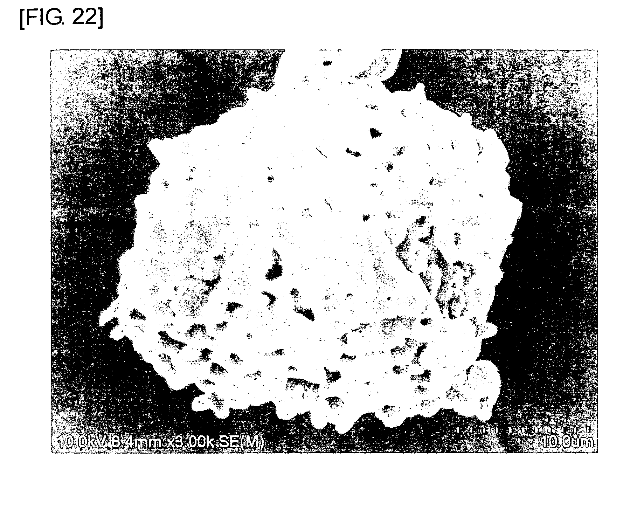

FIG. 22 is a SEM photograph of the obtained aluminum titanate. It can be seen from FIG. 22 that, like Example 1, the product is a porous body having a form in which a plurality of particles of amoeba-like shape are fused together.

The obtained porous aluminum titanate was measured in terms of pore size distribution in the same manner as in Example 1. The pore volume was 0.0602 ml/g, and the specific surface area was 0.346 m²/g.

### (Comparative Example 1)

An amount of 302.26 g of titanium oxide, 423.42 g of aluminum oxide, 29.59 g of silicon oxide and 323.69 g of water were mixed for three hours while milled with a ball mill. The milled mixture obtained in the above manner was dried at 110°C, and 50 g of the dried mixture was packed into a crucible and then fired at 1400°C for four hours in an electric furnace.

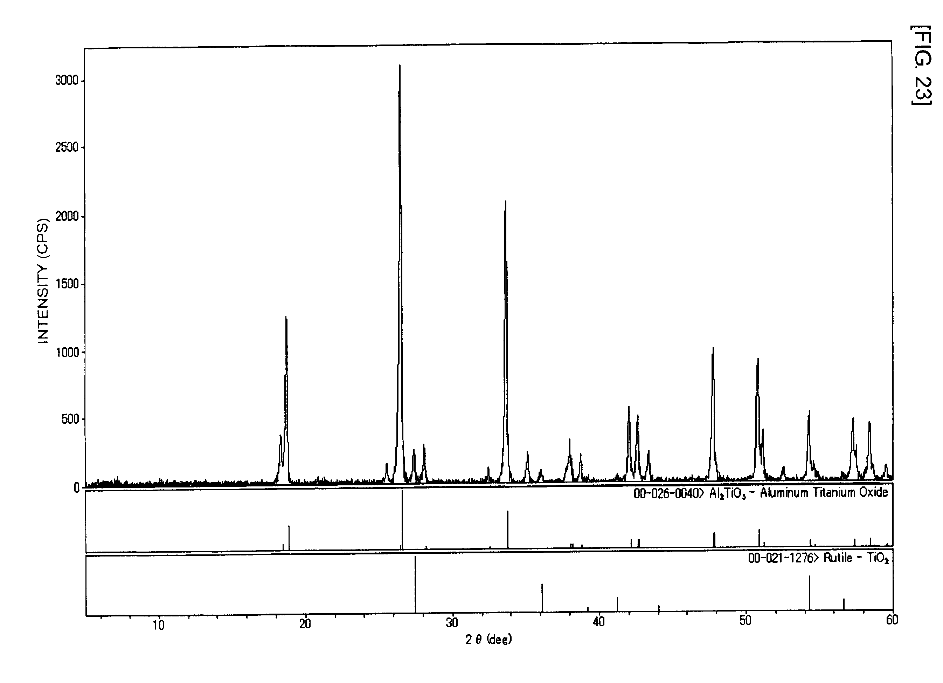

FIG. 23 is an X-ray diffraction pattern chart of the obtained product. As shown in FIG. 23, the obtained product was a mixture of Al₂TiO₅ and TiO₂.

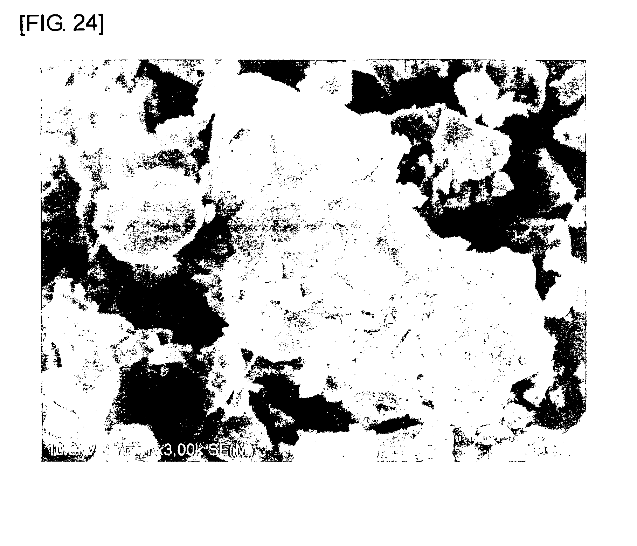

FIG. 24 is a SEM photograph of the obtained aluminum titanate. As shown in FIG. 24, the obtained aluminum titanate was non-porous irregular particles.

The obtained porous aluminum titanate was measured in terms of pore size distribution in the same manner as in Example 1. The pore volume was 0.0122 ml/g, and the specific surface area was 0.257 m²/g.

### (Comparative Example 2)

A milled mixture was prepared in the same manner as in Comparative Example 1 and dried in the same manner as in Comparative Example 1. An amount of 50 g of the obtained dried mixture was packed into a crucible and then fired at 1450°C for four hours in an electric furnace.

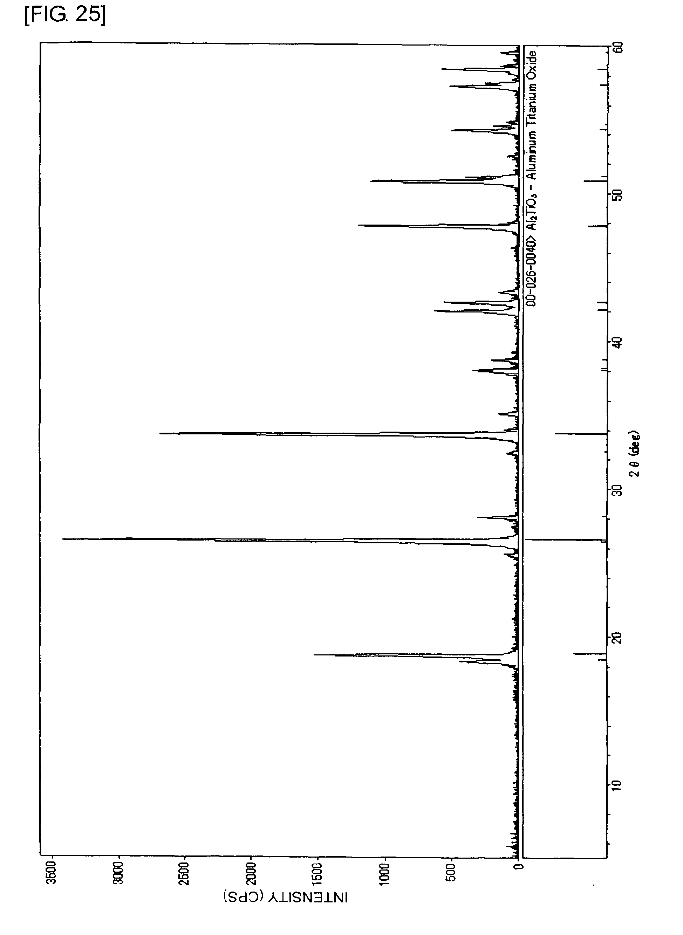

FIG. 25 is an X-ray diffraction pattern chart of the obtained product. As shown in FIG. 25, the obtained product was Al₂TiO₅.

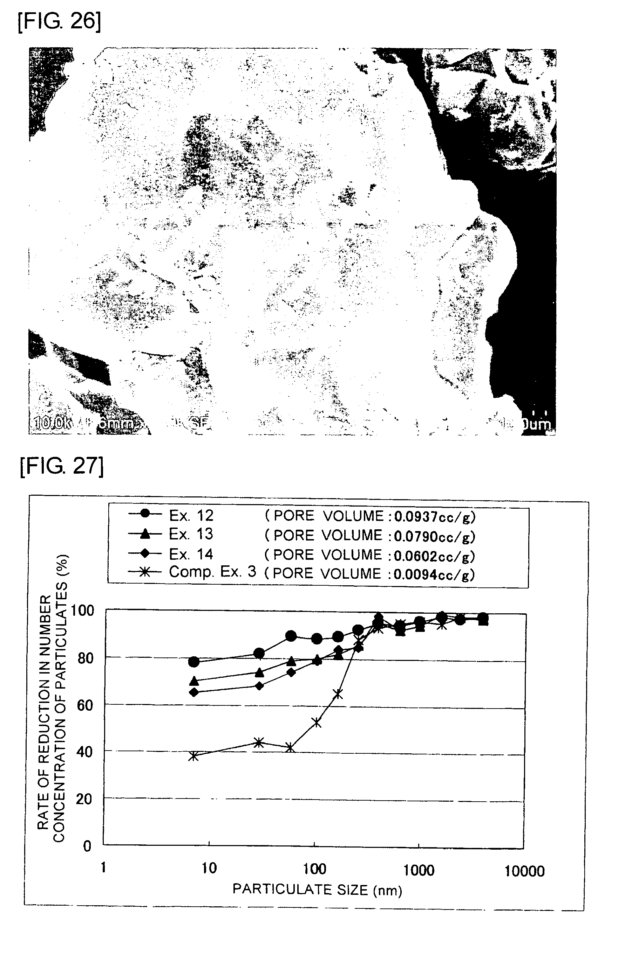

FIG. 26 is a SEM photograph of the obtained aluminum titanate. As shown in FIG. 26, the obtained aluminum titanate was non-porous irregular particles.

The obtained porous aluminum titanate was measured in terms of pore size distribution in the same manner as in Example 1. The pore volume was 0.0094 ml/g, and the specific surface area was 0.248 m²/g.

The production conditions and measured results in Examples 1 to 11 and Comparative Examples 1 and 2 are shown in TABLE 1. Note that in TABLE 1, "Amount of Zinc Oxide" indicates the content of zinc oxide in the source material, and "Type of Mixing" indicates whether milling was performed dry or wet.

**[TABLE 1]**

| | Amount of Zinc Oxide (% by weight) | Type of Mixing | Firing Temp. (°C) | X-Ray Diffraction | Form | Pore Volume (ml/g) | Specific Surface Area (m²/g) |
|---|---|---|---|---|---|---|---|
| Ex. 1 | 0.9 | Dry | 1450 | Al₂TiO₅ | Porous Particles | 0.0937 | 0.447 |
| Ex. 2 | 0.9 | Dry | 1250 | Al₂TiO₅+TiO₂ | Porous Particles | 0.1032 | 0.481 |
| Ex. 3 | 0.9 | Dry | 1300 | Al₂TiO₅ | Porous Particles | 0.0988 | 0.465 |
| Ex. 4 | 0.9 | Dry | 1400 | Al₂TiO₅ | Porous Particles | 0.0972 | 0.459 |
| Ex. 5 | 0.9 | Dry | 1600 | Al₂TiO₅ | Porous Particles | 0.0790 | 0.405 |
| Ex. 6 | 0.5 | Dry | 1450 | Al₂TiO₅ | Porous Particles | 0.0884 | 0.436 |
| Ex. 7 | 1.6 | Dry | 1450 | Al₂TiO₅ | Porous Particles | 0.0912 | 0.439 |
| Ex. 8 | 2.0 | Dry | 1450 | Al₂TiO₅ | Porous Particles | 0.0927 | 0.440 |
| Ex. 9 | 2.2 | Dry | 1450 | Al₂TiO₅+ZnAl₂O₄ | Porous Particles | 0.0826 | 0.412 |
| Ex. 10 | 0.0 | Dry | 1400 | Al₂TiO₅ | Porous Particles | 0.0654 | 0.378 |
| Ex. 11 | 0.0 | Dry | 1450 | Al₂TiO₅ | Porous Particles | 0.0602 | 0.346 |
| Comp.Ex.1 | 0.0 | Wet | 1400 | Al₂TiO₅+TiO₂ | Particles | 0.0122 | 0.257 |
| Comp.Ex.2 | 0.0 | Wet | 1450 | Al₂TiO₅ | Particles | 0.0094 | 0.248 |

As shown in TABLE 1, aluminum titanate products of Examples 1 to 11 produced according to the production method of the present invention are porous particles. On the other hand, aluminum titanate products of Comparative Examples 1 and 2 are non-porous particles.

In aluminum titanate products of Examples 1 to 11 according to the present invention, the pore volume within the pore diameter range of 0.0036 to 10 µm in the pore size distribution as measured by a mercury porosimeter is 0. 05 ml/g or more and within the range of 0.05 to 0.11 ml/g. Particularly, Examples 1 to 9 in which zinc oxide was contained in the source material have a high pore volume, which ranges between 0.07 and 0.11 ml/g.

Furthermore, in Examples 1 to 11 according to the present invention, the specific surface area within the pore diameter range of 0. 0036 to 10 µm in the pore size distribution as measured by the mercury porosimeter is 0.3 m²/g or more and within the range of 0.3 to 0.5 m²/g. Particularly, Examples 1 to 9 in which zinc oxide was contained in the source material have a specific surface area within the range of 0.4 to 0.5 m²/g.

In comparison of Examples 1 and 3 to 5 with Example 2, Example 2 is a mixture of Al₂TiO₅ and TiO₂. The reason for this can be attributed to the fact that titanium oxide serving as a source material remains by a slight amount in an unreacted state. On the other hand, in Examples 1 and 3 to 5 in which the firing temperature was 1300°C or higher, no TiO₂ was found. The reason for this can be attributed to the fact that titanium oxide serving as a source material was fully reacted. Therefore, it can be seen that the firing temperature is preferably 1300°C or higher.

Furthermore, a comparison between Examples 8 and 9 shows that in Example 9 in which the amount of zinc oxide added was 2.2% by weight, not only Al₂TiO₅ but also ZnAl₂O₄ was detected by X-ray diffraction. Therefore, it can be seen that the amount of zinc oxide added is preferably 2.0% by weight or less.

### [Production of Sintered Aluminum Titanate Body]

### (Example 12)

The porous aluminum titanate obtained in Example 1 was ground to prepare it in a particle diameter of 45 µm or less. Compounded into 100 parts by weight of the porous aluminum titanate particles were 20 parts by weight of graphite, 10 parts by weight of methylcellulose and 0.5 parts by weight of fatty acid soap. A suitable amount of water was also added to the mixture, and the mixture was then kneaded, thereby obtaining an extrudable clay.

The obtained clay was extruded and formed into a honeycomb structure by an extruder. The obtained green body was subjected to sealing of one of two end openings of each cell of the green body so that the cell end openings at each end of the green body are arranged in a checkered pattern. Next, the green body was dried by a micro dryer and a hot-air dryer and then fired at 1500°C, thereby obtaining a sintered aluminum titanate body.

### (Example 13)

The porous aluminum titanate obtained in Example 5 was ground to prepare it in a particle diameter of 45 µm or less. Compounded into 100 parts by weight of the porous aluminum titanate particles were 20 parts by weight of graphite, 10 parts by weight of methylcellulose and 0.5 parts by weight of fatty acid soap. A suitable amount of water was also added to the mixture, and the mixture was then kneaded, thereby obtaining an extrudable clay.

The obtained clay was extruded and formed into a honeycomb structure by an extruder. The obtained green body was subjected to sealing of one of two end openings of each cell of the green body so that the cell end openings at each end of the green body are arranged in a checkered pattern. Next, the green body was dried by a micro dryer and a hot-air dryer and then fired at 1500°C, thereby obtaining a sintered aluminum titanate body.

### (Example 14)

The porous aluminum titanate obtained in Example 11 was ground to prepare it in a particle diameter of 45 µm or less. Compounded into 100 parts by weight of the porous aluminum titanate particles were 20 parts by weight of graphite, 10 parts by weight of methylcellulose and 0.5 parts by weight of fatty acid soap. A suitable amount of water was also added to the mixture, and the mixture was then kneaded, thereby obtaining an extrudable clay.

The obtained clay was extruded and formed into a honeycomb structure by an extruder. The obtained green body was subjected to sealing of one of two end openings of each cell of the green body so that the cell end openings at each end of the green body are arranged in a checkered pattern. Next, the green body was dried by a micro dryer and a hot-air dryer and then fired at 1500°C, thereby obtaining a sintered aluminum titanate body.

### (Comparative Example 3)

The aluminum titanate obtained in Comparative Example 2 was ground to prepare it in a particle diameter of 45 µm or less. Compounded into 100 parts by weight of the porous aluminum titanate particles were 20 parts by weight of graphite, 10 parts by weight of methylcellulose and 0.5 parts by weight of fatty acid soap. A suitable amount of water was also added to the mixture, and the mixture was then kneaded, thereby obtaining an extrudable clay.

The obtained clay was extruded and formed into a honeycomb structure by an extruder. The obtained green body was subjected to sealing of one of two end openings of each cell of the green body so that the cell end openings at each end of the green body are arranged in a checkered pattern. Next, the green body was dried by a micro dryer and a hot-air dryer and then fired at 1500°C, thereby obtaining a sintered aluminum titanate body.

### <Determination of Rate of Reduction in Number Concentration of Particulates>

The sintered aluminum titanate bodies of honeycomb structure obtained in Examples 12 to 14 and Comparative Example 3 were determined in terms of rate of reduction in number concentration of particulates. Specifically, exhaust gas from a diesel engine was allowed to flow into each obtained sintered aluminum titanate body and measured upstream and downstream of the sintered body in terms of number concentration of particulates for each of several different particulate diameter groups by an electrical low pressure impactor, and the rate of reduction in number concentration of particulates was determined. The results are shown in FIG. 27.

As shown in FIG. 27, it can be seen that the sintered aluminum titanate bodies of Examples 12 to 14 produced using the porous aluminum titanate products of Examples according to the present invention are excellent in ability to trap small-diameter particulates, particularly particulates with a diameter of 100 nm or less.

## Claims

1. Porous aluminum titanate composed of porous particles each having a form in which a plurality of particles of amoeba-like shape having a plurality of projections extending in random directions are fused together.

2. Porous aluminum titanate of claim 1, wherein the pore volume within the pore diameter range of 0.0036 to 10 µm in a pore size distribution as measured by a mercury porosimeter is 0.05 ml/g or more.

3. Porous aluminum titanate of claim 1 or 2, wherein the specific surface area within the pore diameter range of 0. 0036 to 10 µm in a pore size distribution as measured by a mercury porosimeter is 0.3 m²/g or more.

4. A porous sintered aluminum titanate body obtained by firing a green body formed using the porous aluminum titanate of any one of claims 1 to 3.

5. A method for producing the porous aluminum titanate of any one of claims 1 to 3, the method comprising the steps of:
mixing a source material containing a titanium source and an aluminum source while mechanochemically milling the source material; and
firing the milled mixture obtained.

6. The method for producing the porous aluminum titanate of claim 5, wherein the milled mixture is fired within the temperature range of 1300°C to 1600°C.

7. The method for producing the porous aluminum titanate of claim 5 or 6, wherein a zinc compound is further contained in the source material.

8. The method for producing the porous aluminum titanate of claim 7, wherein the content of the zinc compound is within the range of 0.5% to 2.0% by weight, in terms of zinc oxide, relative to the sum of the titanium source and the aluminum source.

9. The method for producing the porous aluminum titanate of any one of claims 5 to 8, wherein a silicon source is further contained in the source material.

10. The method for producing the porous aluminum titanate of any one of claims 5 to 9, wherein the mechanochemical milling is milling using a vibration mill.
